# EUROPEAN PATENT SPECIFICATION

(11) **EP 3 714 414 B1**
(45) Date of publication and mention of the grant of the patent: **11.03.2026**
(21) Application number: 18877477.2
(22) Date of filing: 20.11.2018
(51) Int. Cl.: G06Q 20/06, G06Q 20/38

(54) **CURRENCY SETTLEMENT METHOD, APPARATUS, AND ELECTRONIC DEVICE**
VERFAHREN, VORRICHTUNG UND ELEKTRONISCHES GERÄT ZUR ABRECHNUNG IN EINER WÄHRUNG
PROCÉDÉ, APPAREIL ET DISPOSITIF ÉLECTRONIQUE DE RÈGLEMENT EN DEVISES

(30) Priority: 20.11.2017 CN 201711160480
(43) Date of publication of application: 30.09.2020
(73) Proprietor: Antpool Technologies Limited, Wan Chai (HK)
(72) Inventor: HONG, Sen, Singapore 169776 (SG); XU, Lingchao, Singapore 169776 (SG)
(74) Representative: Dr. Gassner & Partner mbB
(86) International application number: PCT/CN2018/116503
(87) International publication number: WO 2019/096331

(56) References cited:
- CN-A- 106 097 030
- CN-A- 106 469 366
- CN-A- 107 077 675
- CN-A- 107 230 053
- CN-A- 107 230 071
- CN-A- 107 944 848
- US-A1- 2015 170 112
- US-A1- 2016 239 813
- US-A1- 2017 221 053

## Description

### CROSS-REFERENCE TO RELATED APPLICATION

This application claims the priority to Chinese Patent Application No. 201711160480.8, entitled "CURRENCY SETTLEMENT METHOD, APPARATUS, AND ELECTRONIC DEVICE," filed on November 20, 2017.

### TECHNICAL FIELD

The present disclosure relates to the field of information processing, and in particular, to a currency settlement method, apparatus, and electronic device.

### BACKGROUND

With the continuous development of information technology, blockchains have been under rapid development. Blockchain technology is the underlying technology of the cryptocurrency Bitcoin which emerged in 2008. A blockchain refers to a chain of blocks generated by cryptographic methods. The block data in each block in the blockchain is associated with the block data in the previous block. In order to ensure that the blocks in the blockchain can be quickly and correctly generated, in the data sharing system of the blockchain technology, mining nodes are used to generate the blocks. A mining node refers to one or more mining machines, which are computers used to mine blockchain data. The mining nodes are connected into a cryptocurrency mining pool system in the data sharing system. Through the P2P (peer-to-peer) network, the mining nodes listen to the shared broadcast in the data sharing system. They confirm the shared broadcast and generate blocks including the shared broadcast data. After the forgoing operations are completed, the cryptocurrency mining pool system settles with the mining nodes according to the work they performed, so that the mining nodes may earn certain amount of currency for accelerating the processing of the shared broadcast.

When the cryptocurrency mining pool system settles the work with a mining node, it generally determines the type of income generated by the mining node in the data sharing system, and determines which currency is used to settle with the mining node according to the type of income. For example, if the work performed by the mining node produces bitcoins in the data sharing system, the cryptocurrency mining pool system uses bitcoins for settlement when the work of the mining node is being settled.

When the cryptocurrency mining pool system settles the workload with a mining node based on a virtual currency, such as a cryptocurrency, it randomly generates an address for the virtual currency, and sends the address to the mining node. Since the address of the virtual currency is randomly generated, it is possible for a perpetrator to change the virtual currency address, causing potential loss for the cryptocurrency mining pool system, and making it more difficult to track the virtual currency according to the address.

US2017/221053A1 discloses a method of converting digital assets into a transaction currency that it suitable for use in a transaction system that is not adapted for transactions using the digital assets. The digital assets are stored so that they can be used with one or more exchanges adapted for conversion of the digital assets into the transaction currency. A balance in the transaction currency is established for use by a payment device. Rules are established for maintaining the transaction currency balance. When required by the rules for maintaining the transaction currency balance, digital assets are converted into the transaction currency at the one or more exchanges for maintaining the transaction currency balance in the transaction currency for use by the payment device.

### SUMMARY

In order to overcome the problem in currency settlement that the address of a cryptocurrency may be easily changed, the present disclosure provides a currency settlement method, apparatus and electronic device.

The invention is set out in the appended set of claims. In one aspect of the present disclosure, a currency settlement method for a cryptocurrency mining pool system is provided. The method includes: settling, by a processor of the cryptocurrency mining pool system, with a mining node using a virtual currency according to a workload performed by the mining node and an income type of the mining node; transacting, by the processor, with an exchange institution to exchange an amount of the virtual currency into an amount of a fiat currency, so that the exchange institution identifies a transaction partner, transmits the amount of the virtual currency to the transaction partner to exchange to an amount of a fiat currency, the amount of the fiat currency having a same monetary value as the amount of the virtual currency and receives the amount of the fiat currency from the transaction partner; identifying, by the processor, a settlement account associated with the mining node, where the settlement account is associated with a user card number, an account name, and user account information; and transferring, by the processor, the amount of the fiat currency to the settlement account.

In certain embodiments, before settling, by the processor, with the mining node, the currency settlement method further includes: detecting, by the processor, the mining node accessing the cryptocurrency mining pool system; acquiring, by the processor, a node identifier associated with the mining node; acquiring, by the processor, information of the settlement account associated with the mining node; and storing, by the processor, the node identifier and the account information.

In certain embodiments, the transacting, by the processor, with the exchange institution to exchange the amount of the virtual currency into the amount of the fiat currency includes: sending, by the processor, a transaction request to the exchange institution to request a transaction partner, where the transaction request includes at least the amount in the virtual currency; receiving, by the processor, a transaction confirmation command from the exchange institution; transmitting, by the processor, the amount of the virtual currency to the exchange institution; and receiving, by the processor, the amount of the fiat currency from the exchange institution.

In certain embodiments, after transferring, by the processor, the amount of the fiat currency to the settlement account, the currency settlement method further includes: determining, by the processor, an exchange rate between the virtual currency and the fiat currency; and sending, by the processor, the exchange rate to the mining node, so that the mining node may present the exchange rate.

In certain embodiments, the currency settlement method further includes: if receiving a request from the mining node to settle in the virtual currency, generating, by the processor, a virtual currency address for the virtual currency, and sending the virtual currency address to the mining node.

In another aspect of the present disclosure, a currency settlement method for an exchange institution is provided. The method includes: receiving, by a processor of the exchange institution, a transaction request from a cryptocurrency mining pool system, where the transaction request includes at least an amount in a virtual currency; identifying, by the processor, a transaction partner according to the transaction request; sending, by the processor, a transaction confirmation command to the cryptocurrency mining pool system; receiving, by the processor, the amount of the virtual currency from the cryptocurrency mining pool system; transmitting, by the processor, the amount of the virtual currency to the transaction partner to exchange to an amount of a fiat currency, where the amount of the fiat currency has a same monetary value as the amount of the virtual currency; receiving, by the processor, the amount of the fiat currency from the transaction partner; and transferring, by the processor, the amount of the fiat currency to the cryptocurrency mining pool system.

In another aspect of the present disclosure, a currency settlement method for a transaction partner is provided. The method includes: receiving, by a processor of the transaction partner an amount of a virtual currency from an exchange institution; determining, by the processor, an amount of a fiat-currency according to the amount of the virtual currency, where the amount of the fiat-currency has a same monetary value as the amount of the virtual currency; and transferring, by the processor, the fiat currency to the exchange institution, so that the exchange institution transfers the amount of the fiat currency to the cryptocurrency mining pool system.

In another aspect of the present disclosure, a currency settlement apparatus for a cryptocurrency mining pool system is provided. The virtual currency settlement apparatus comprises a memory storing one or more computer programs; and a processor coupled to the memory and configured to make a settlement with a mining node in a virtual currency according to a workload performed by the mining node and an income type of the mining node; transact with an exchange institution to exchange an amount of the virtual currency into an amount of a fiat currency, so that the exchange institution identifies a transaction partner, transmits the amount of the virtual currency to the transaction partner to exchange to an amount of a fiat currency, the amount of the fiat currency having a same monetary value as the amount of the virtual currency and receives the amount of the fiat currency from the transaction partner; and identify a settlement account associated with the mining node and transfer the amount of the fiat currency to the settlement account, where the settlement account is associated with a user card number, an account name, and user account information.

In certain embodiments, the processor is further configured to: detect the mining node accessing the cryptocurrency mining pool system, acquire a node identifier associated with the mining node, and acquire account information of the settlement account associated with the mining node; and store the node identifier and the account information.

In certain embodiments, the processor is further configured to: access the exchange institution, and send a transaction request to the exchange institution requesting a transaction partner, where the transaction request includes at least the amount in the virtual currency; after receiving a transaction confirmation command from the exchange institution, transmit the amount of the virtual currency to the exchange institution; and receive the amount of the fiat currency from the exchange institution.

In certain embodiments, the processor is further configured to: determine an exchange rate between the virtual currency and the fiat currency; and send the exchange rate to the mining node to present the exchange rate.

In certain embodiments, the processor is further configured to: if receiving a request from the mining node to settle in the virtual currency, generate a virtual currency address for the virtual currency; and send the virtual currency address to the mining node.

In another aspect of the present disclosure, a currency settlement apparatus for an exchange institution is provided. The virtual currency settlement apparatus comprises a memory storing one or more computer programs; and a processor coupled to the memory and configured to: receive a transaction request from a cryptocurrency mining pool system, where the transaction request includes at least an amount in a virtual currency; identify a transaction partner according to the transaction request, and send a transaction confirmation command to the cryptocurrency mining pool system; and receive the amount of the virtual currency from the cryptocurrency mining pool system, transmit the amount of the virtual currency to the transaction partner, receive the amount of the fiat currency from the transaction partner, and transfer the fiat currency to the cryptocurrency mining pool system.

In another aspect of the present disclosure, a currency settlement apparatus for a transaction partner is provided. The virtual currency settlement apparatus comprises a memory storing one or more computer programs; and a processor coupled to the memory and configured to: receive a virtual currency from an exchange institution, where the virtual currency has been generated by a cryptocurrency mining pool system and transmitted to the exchange institution; determine an amount of a fiat currency according to an amount of the virtual currency, where the amount of the fiat currency has a same monetary value as the amount of the virtual currency; and transfer the amount of the fiat currency to the exchange institution, so that the exchange institution transfers the amount of the fiat currency to the cryptocurrency mining pool system.

In another aspect of the present disclosure, a currency settlement apparatus for a cryptocurrency mining pool system is provided. The apparatus includes: a memory storing one or more computer programs; and a processor coupled to the memory and configured to perform: settling with a mining node using a virtual currency according to a workload performed by the mining node and an income type of the mining node; transacting with an exchange institution to exchange an amount of the virtual currency into an amount of a fiat currency; identifying a settlement account associated with the mining node, where the settlement account is associated with at least a user card number, an account name, and user account information; and transferring the amount of the fiat currency to the settlement account.

In certain embodiments, before settling with the mining node, the processor is configured to further perform: detecting the mining node accessing the cryptocurrency mining pool system; acquiring a node identifier associated with the mining node; acquiring account information of the settlement account associated with the mining node; and storing the node identifier and the account information.

In certain embodiments, after transferring the amount of the fiat currency to the settlement account, the processor is configured to further perform: determining an exchange rate between the virtual currency and the fiat currency; and sending the exchange rate to the mining node to present the exchange rate.

In another aspect of the present disclosure, a currency settlement apparatus for an exchange institution is provided. The apparatus includes: a memory storing one or more computer programs; and a processor coupled to the memory and configured to perform: receiving a transaction request from a cryptocurrency mining pool system, where the transaction request includes at least an amount in a virtual currency; identifying a transaction partner according to the transaction request; sending a transaction confirmation command to the cryptocurrency mining pool system; receiving the virtual currency from the cryptocurrency mining pool system; transmitting the virtual currency to the transaction partner; receiving an amount of a fiat currency from the transaction partner; and transferring the amount of the fiat currency to the cryptocurrency mining pool system.

In another aspect of the present disclosure, a currency settlement apparatus for a transaction partner is provided. The apparatus includes: a memory storing one or more computer programs; and a processor coupled to the memory and configured to perform: receiving an amount of a virtual currency from an exchange institution, where the amount of the virtual currency has been generated by a cryptocurrency mining pool system and transmitted to the exchange institution; determining an amount in a fiat-currency according to the amount in the virtual currency, where the amount of the fiat-currency has a same monetary value as the amount of the virtual currency; and transferring the amount of the fiat currency to the exchange institution.

The technical solutions provided by the present disclosure may provide several advantages. The cryptocurrency mining pool system settles with the mining node according to its workload to acquire virtual currency based on the type of income of the mining node. The cryptocurrency mining pool system conducts transactions with the exchange institution, so that the virtual currency is exchanged into fiat currency, and then transfers the fiat currency to the settlement account established by the mining node user. Since the virtual currency is exchanged into fiat currency, and the settlement account includes the user's card number, account name, and user account information, the security of the currency during settlement is improved, and the loss in the cryptocurrency mining pool system is prevented. Furthermore, it is easier to track the currency according to the settlement account.

### BRIEF DESCRIPTION OF THE DRAWINGS

In order to more clearly illustrate the technical solutions in the embodiments of the present disclosure, the drawings used in the description of the embodiments will be briefly described below.
FIG. 1A is a flowchart of a currency settlement method according to an exemplary embodiment;
FIG. 1B is a flowchart of a currency settlement method according to an exemplary embodiment;
FIG. 1C is a flowchart of a currency settlement method according to an exemplary embodiment;
FIG. 2 is a schematic diagram of a currency settlement system according to an exemplary embodiment;
FIG. 3A-FIG. 3C are flowcharts of a currency settlement method according to an exemplary embodiment;
FIG. 4A is a block diagram of a currency settlement apparatus according to an exemplary embodiment;
FIG. 4B is a block diagram of a currency settlement apparatus according to an exemplary embodiment;
FIG. 4C is a block diagram of a currency settlement apparatus according to an exemplary embodiment;
FIG. 4D is a block diagram of a currency settlement apparatus according to an exemplary embodiment;
Figure 4E is a block diagram of a currency settlement apparatus according to an exemplary embodiment;
FIG. 5 is a block diagram of a currency settlement apparatus according to an exemplary embodiment;
FIG. 6 is a block diagram of a currency settlement apparatus according to an exemplary embodiment; and
FIG. 7 is a block diagram illustrating a currency settlement apparatus according to an exemplary embodiment.

### DETAILED DESCRIPTION OF THE EMBODIMENTS

Technical solutions of the present disclosure will be described with reference to the accompanying drawings. Unless otherwise indicated, the same numerical referrals in different drawings refer to the same or similar elements. Implementations of the following exemplary embodiments described herein are not limiting. Instead, they are merely examples of devices and methods consistent with aspects of the present disclosure. Other embodiments derived by those with ordinary skills in the art according to the described embodiments without inventive efforts shall fall within the scope of the present disclosure.

A virtual currency such as Bitcoin may be considered as a virtual "token" in transactions, representing ledger entries internal to the data sharing system. The blockchain technology may be used to store an online ledger of all the transactions that have ever been conducted using a certain virtual currency, providing a data structure for this ledger that can be copied across all computers in the data sharing network. Certain virtual currencies, such as the cryptocurrency Bitcoin, may be transferred between two parties in a transaction without the need for a third party such as a bank.

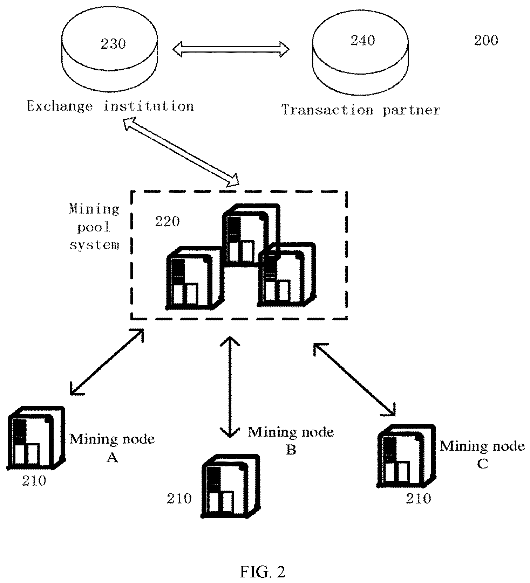

Referring to a currency settlement system 200 shown in FIG. 2, the currency settlement system refers to a system for settling workload of a mining node, and the currency settlement system may include a plurality of mining nodes 210, a cryptocurrency mining pool system 220, an exchange institution 230, and a transaction partner 240. The mining node may be a computing device operated by a user, and the user may perform various operations on the mining node to generate a workload. The cryptocurrency mining pool system may make virtual currency settlements with a plurality of mining nodes according to the workload of the mining nodes. The cryptocurrency mining pool system may determine how much income a mining node earns in previous work, and issue the income to the mining node in the form of a virtual currency. The transfers may be facilitated through the use of public keys and private keys through a computer network, and thus, no physical copies of the currency are needed. In certain embodiments, a user's account address (sometimes referred to as a digital wallet), is associated with the public key. A private key may be created through a complicated mathematical algorithm that is difficult to reverse. A user's account address, relevant public keys or private keys are stored in computer readable medium, and can be retrieved by various computers in the mining pool system and by the computers involved in the virtual currency settlement process. The digital wallet may store the private key of a user. When a transaction is initiated, the wallet software creates a digital signature by processing the transaction with the private key. If a user wishes to receive the mining node income in in another type of asset, such as a fiat currency, the exchange institution may provide the exchange service for the cryptocurrency mining pool system. The exchange institution may be an exchange brokerage with an E-business platform or a C2C (Customer to Customer) platform. During the exchange, virtual currency may be digitally sent to a transaction partner's cryptocurrency wallet, or to the mining pool system's ledger, or may be converted to a digital currency balance that can be deposited to a prepaid card. Since the user settlement accounts may only receive fiat currency, the cryptocurrency mining pool system may need to issue transaction service request to the exchange institution, requesting the exchange institution to sell the virtual currency to a corresponding transaction partner in exchange for fiat currency. The transaction partner may serve as the intermediate designated by the exchange institution for exchanging a virtual currency for a fiat currency. The transaction partner may be a clearing house or an individual or an entity having electronic access to the platform of the exchange institution. When the exchange institution receives the transaction request sent by the cryptocurrency mining pool system, the exchange institution may identify the transaction partner that can perform the exchange with according to the amount of the virtual currency that needs to be exchanged according to the transaction request. The exchange institution may then perform the virtual currency exchange with the transaction partner, so that the settlement can be made in the fiat currency, eliminating the need for the cryptocurrency mining pool system to manage multiple types of virtual currencies.

The forgoing currency settlement system can be implemented by a data sharing system. A data sharing system refers to a system for sharing data between nodes. The data sharing system may include a plurality of mining nodes, and the mining nodes may generate income by recording data for a plurality of nodes in the data sharing system.

In embodiments of the present disclosure, since the settlement may be made in fiat currency, the steps for generating and transmitting a virtual currency address is no longer required. This eliminates the system vulnerability of the virtual currency address being intercepted and changed by an unauthorized party and thus improves the security of the payment process. Thus, the integrity of the system data and security of the settlement and the related computer systems (e.g., the mining node, the mining pool, the exchange institution, etc.) are better protected. Further, the disclosed method and system offer better flexibility and convenience for the users of the mining node, offering them options of receiving the mining node income as fiat currency, so that the users do not need to perform a sperate step to exchange the cryptocurrency into a fiat currency afterwards. In a related aspect, in embodiments of the present disclosure, since the exchange can be conducted automatically from the user's perspective, the settlement may be performed in a frequency that the user wishes. The user no longer needs to wait a long period for a settlement to take place, instead, the user may request settlement based on the exchange rate at a particular moment in real time. For example, the user may request settlement before, after, or during the process when a mining node is performing a certain task, and the settlement may reflect the work completed by the mining node in real time by providing the user with credit of partially completed tasks.

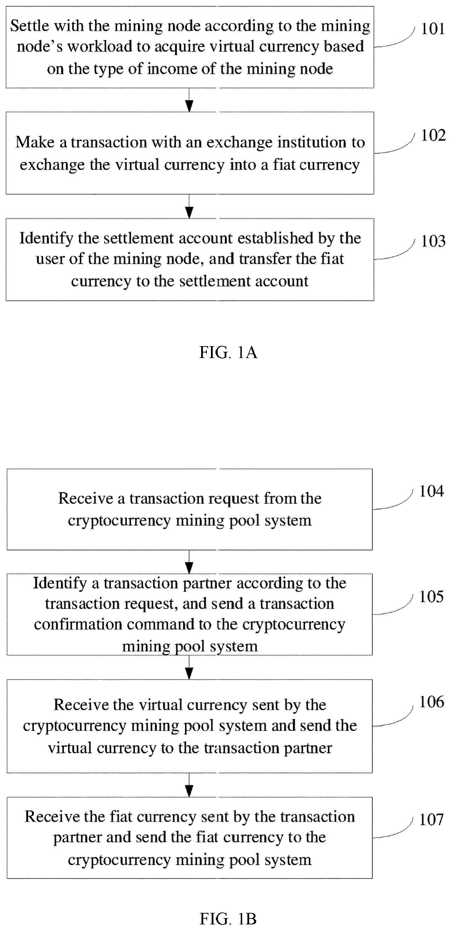

FIG. 1A is a flow chart showing a method of currency settlement according to an exemplary embodiment. As shown in FIG. 1A, the method may be applied to a cryptocurrency mining pool system, and the method may include the following steps.

In step 101, the cryptocurrency mining pool system settles with a mining node according to the mining node's workload to acquire virtual currency based on the type of income of the mining node.

In certain embodiments, the workload of the mining node may be associated with the amount of hash calculations the mining node performs in a period of time by the settlement. Both the mining pool systems and the mining node may keep track of the workload. The settlement may take place at a schedule pre-determined by the mining pool system, by the user of the mining node, or triggered in real time by an external event trigger such as a status change of another mining node, or a status change of the mining pool. For example, the settlement process may monitor the status of the mining nodes in a mining pool, and may initiate the settlement process automatically based on the status changes of one or more the mining nodes. Once triggered, the settlement process may be carried out without any further user or operator actions. In some embodiment, the user may submit a request for settlement through a user interface.

In step 102, the cryptocurrency mining pool system makes a transaction with an exchange institution to exchange the virtual currency into a fiat currency. The fiat currency has equal monetary value as the virtual currency.

In step 103, the cryptocurrency mining pool system identifies the settlement account established by the user of the mining node, and transfers the fiat currency to the settlement account. The settlement account includes at least the user's card number, account name, and user account information.

In certain embodiments, the user's card number may be a bank card number, credit card number, a debit card number, and so on, which is associated with a fiat currency account.

In certain embodiments, the cryptocurrency mining pool system settles with a mining node according to the mining node's workload to acquire virtual currency based on the type of income of the mining node earns. The cryptocurrency mining pool system conducts a transaction with an exchange institution, so that the virtual currency is exchanged into fiat currency, and then the fiat currency is transferred to a settlement account established by the mining node user. Since the virtual currency is exchanged into fiat currency, and the settlement account includes the user's card number, account name, and user account information, the security of the currency during settlement is improved, and the loss in the cryptocurrency mining pool system is prevented. Furthermore, it is easier to track the currency according to the settlement account.

In certain embodiments, prior to settling with the mining node according to its workload to acquire virtual currency based on the type of income of the mining node, the method may further include the following steps.

When detecting that a mining node is accessing the cryptocurrency mining pool system, the mining pool system acquires a settlement account of the mining node; and the mining pool system stores a node identifier of the mining node with the corresponding settlement account in a storage device.

In certain embodiments, the making the transaction with the exchange institution to exchange the virtual currency into a fiat currency may include the following steps.

The cryptocurrency mining pool system accesses the exchange institution and submits a transaction request to the exchange institution, so that the exchange institution identifies a transaction partner according to the transaction request. The transaction request includes at least the currency quantity of the virtual currency.

After receiving a transaction confirmation command sent by the exchange institution after the transaction partner is identified, the cryptocurrency mining pool system sends the virtual currency to the exchange institution, so that the exchange institution may send the virtual currency to the transaction partner. After receiving the virtual currency, the transaction partner sends the fiat currency to the exchange institution, and the cryptocurrency mining pool system receives the fiat currency sent by the exchange institution.

In certain embodiments, after identifying the settlement account established by the user of the mining node and transferring the fiat currency to the settlement account, the method may further include: determining the settlement exchange rate between the virtual currency and the fiat currency; and transmitting the settlement exchange rate to the mining node, so that the mining node may present the exchange rate to the user.

In certain embodiments, the method may further include the following steps.

If receiving a request from the mining node to settle its workload based on virtual currency, the cryptocurrency mining pool system generates a virtual currency address of the virtual currency, and sends the virtual currency address to the mining node.

All of the forgoing technical solutions can be implemented in conjunction with any optional form of embodiments of the present disclosure, which is not repeated.

FIG. 1B is a flowchart of a currency settlement method according to an exemplary embodiment. As shown in FIG. 1B, the method is applied to an exchange institution, and the method includes the following steps.

In step 104, the exchange institution receives a transaction request from the cryptocurrency mining pool system. The transaction request includes at least a currency quantity of the virtual currency to be exchanged.

In step 105, the exchange institution identifies a transaction partner according to the transaction request, and sends a transaction confirmation command to the cryptocurrency mining pool system, so that the cryptocurrency mining pool system may send the virtual currency to the exchange institution upon receiving the transaction confirmation command.

In step 106, the exchange institution receives the virtual currency sent by the cryptocurrency mining pool system and sends the virtual currency to the transaction partner. After the transaction partner receives the virtual currency, the transaction partner sends the fiat currency to the exchange institution. The fiat currency has qual monetary value with the virtual currency.

In step 107, the exchange institution receives the fiat currency sent by the transaction partner and sends the fiat currency to the cryptocurrency mining pool system, so that the cryptocurrency mining pool system may perform currency settlement based on the fiat currency.

In the forgoing method provided by the present disclosure, the exchange institution receives the transaction request sent by the cryptocurrency mining pool system, identifies a transaction partner according to the transaction request, and sends a transaction confirmation command to the cryptocurrency mining pool system, so that after receiving the transaction confirmation command, the cryptocurrency mining pool system may send the virtual currency to the exchange institution. After receiving the virtual currency sent by the cryptocurrency mining pool system, the exchange institution sends the virtual currency to the transaction partner, so that the transaction partner may send the fiat currency to the exchange institution after receiving the virtual currency. After receiving the fiat currency sent by the transaction partner, the exchange institution sends the fiat currency to the cryptocurrency mining pool system, so that the cryptocurrency mining pool system may perform currency settlement based on the fiat currency. Since the virtual currency is exchanged into fiat currency, and the settlement account includes the user's card number, account name, and user account information, the security of the currency during settlement is improved, and the loss in the cryptocurrency mining pool system is prevented. Furthermore, it is easier to track the currency according to the settlement account.

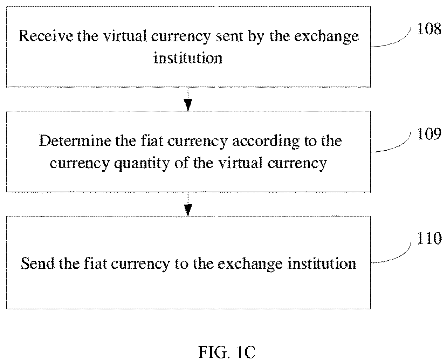

FIG. 1C is a flowchart of a currency settlement method according to an exemplary embodiment. As shown in FIG. 1C, the method is applied to a transaction partner, and the method includes the following steps.

In step 108, the transaction partner receives the virtual currency sent by the exchange institution, wherein the virtual currency is generated by the cryptocurrency mining pool system and sent to the exchange institution.

In step 109, according to the currency quantity of the virtual currency, the transaction partner determines the fiat currency, where the fiat currency has equal monetary value as the virtual currency.

In step 110, the transaction partner sends the fiat currency to the exchange institution, so that the exchange institution may send the fiat currency to the cryptocurrency mining pool system.

In the forgoing method provided by the present disclosure, the transaction partner receives the virtual currency sent by the exchange institution, determines the fiat currency according to the currency quantity of the virtual currency, and sends the fiat currency to the exchange institution, so that the exchange institution may send the fiat currency to the cryptocurrency mining pool system. Since the virtual currency is exchanged into fiat currency, and the settlement account includes the user's card number, account name, and user account information, the security of the currency during settlement is improved, and the loss in the cryptocurrency mining pool system is prevented. Furthermore, it is easier to track the currency according to the settlement account.

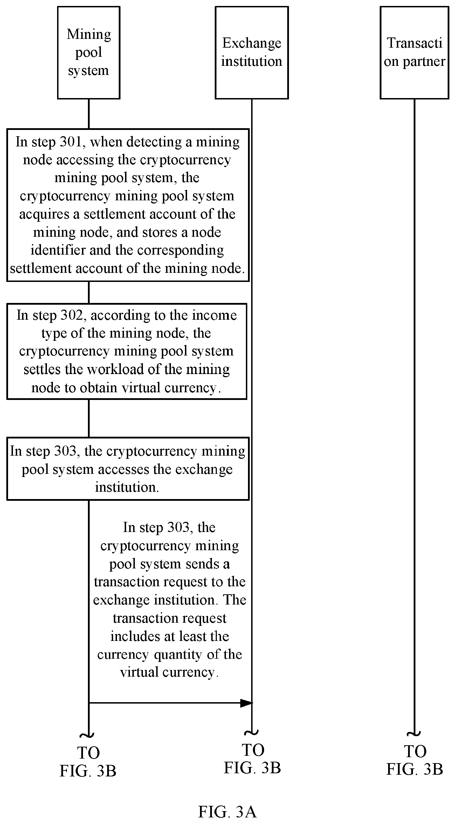

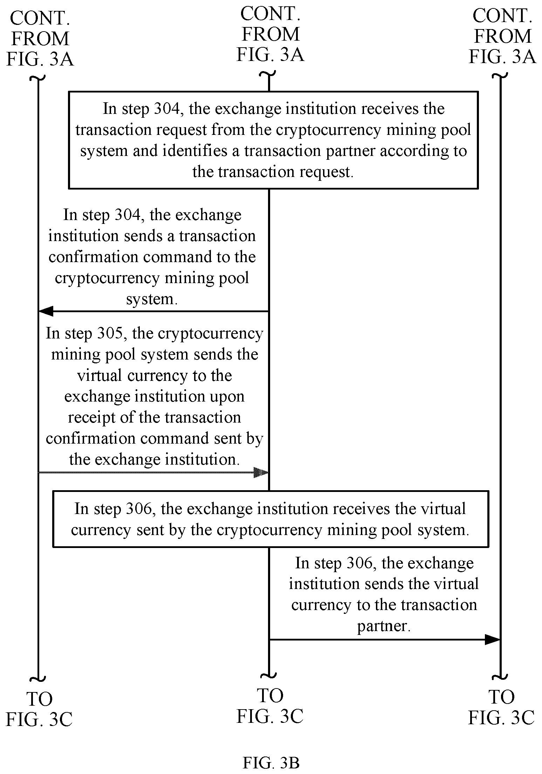

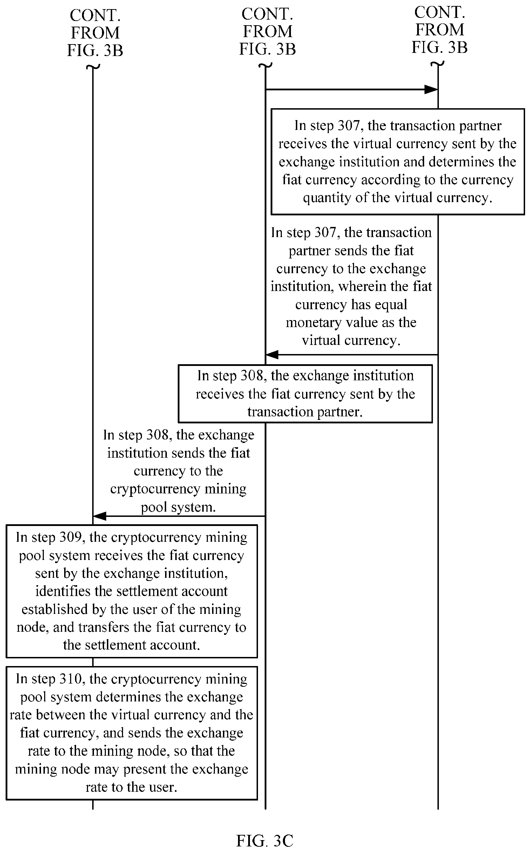

FIG. 3A-FIG. 3C are flow charts showing a method of currency settlement according to an exemplary embodiment. As shown in FIG. 3A-FIG. 3C, the method may include the following steps.

In step 301, when detecting a mining node accessing the cryptocurrency mining pool system, the cryptocurrency mining pool system acquires a settlement account of the mining node, and stores a node identifier and the corresponding settlement account of the mining node. The settlement account includes at least a card number of the user, the account name, and the user account information.

When the cryptocurrency mining pool system is in a typical process of currency settlement, it may randomly generate a currency address of the virtual currency and issue the currency address to the mining node, thereby completing the settlement. In this settlement process, a perpetrator may intercept the transmitted currency address and tamper with it to steal the currency. In order to ensure the security of issuing currency to the mining node and to facilitate the tracking of the currency, the cryptocurrency mining pool system may request the user of the mining node to set up a settlement account for the currency settlement when detecting the access of the mining node. The settlement account may include the user's card number, the account name, and the user account information, etc., so as to facilitate the tracking of the currency according to the forgoing information. In addition, since the settlement account established by the user can only receive fiat currency, in order to complete the currency settlement, the cryptocurrency mining pool system needs to exchange the virtual currency into fiat currency when issuing the currency to the mining node. Further, since fiat currency is essentially a physical currency, there is no need to generate a currency address for the currency, improving the security of issuing the currency.

After the mining node is connected to the cryptocurrency mining pool system, the terminal held by the user for controlling the mining node may display the interface for the settlement account configuration. When the terminal detects that the user triggers the settlement account configuration interface, it may display an account input box and a confirmation button, so that the user may enter the account number in the account input box. When the terminal detects that the user triggers the confirmation button, it obtains the settlement account number entered by the user in the account input box, and stores the settlement account number with the corresponding node identifier of the mining node. When the currency settlement is subsequently performed for the mining node, the settled currency can be transferred to the settlement account established by the user. When storing the settlement account number with the corresponding node identifier of the mining node, the cryptocurrency mining pool system may generate a settlement account list as shown in Table 1. Table 1 shows an exemplary format of the settlement account storage. The present disclosure does not specifically limit the manner in which the cryptocurrency mining pool system stores the settlement account.

**Table 1**

| Node identifier | Settlement account |
|---|---|
| Mining node A | 188XXXX9009 |
| Mining node B | 185XXXX3007 |
| ... | ... |

In certain embodiments, the user interface on the user's terminal may be further configured for the user to communicate with the mining pool system or to set up preference parameters. For example, the user may use the interface to send a request for a settlement in real time, or set a time schedule for multiple settlements. When a transaction confirmation is received, the available transaction partner may be presented to the user via the user interface, and the user may approve or reject a particular transaction. Alternatively, the user may configure automatic approvals, rejections, or holding for user review via the user interface based on certain criteria, for example, the real-time exchange rate between the virtual currency and the fiat currency, the amount to be exchanged, and certain transaction partners, and so on. In certain embodiments, the user interface may also be used to display and interact with the operation and exchange progress of multiple mining nodes.

If the user of the mining node has not established a settlement account when the mining node is accessing the cryptocurrency mining pool system, the cryptocurrency mining pool system may set the account number as null when storing the node identifier and the corresponding settlement account number of the mining node to the settlement account list. Alternatively, the cryptocurrency mining pool system may not store the node identifier of the mining node to the settlement account list. Thus, when the cryptocurrency mining pool system subsequently settles the workload of the mining node, the cryptocurrency mining pool system may directly generate virtual currency and a currency address for the settlement.

In step 302, according to the income type of the mining node, the cryptocurrency mining pool system settles the workload of the mining node to obtain virtual currency.

In certain embodiments of the present disclosure, since the cryptocurrency mining pool system settles the workload of the mining node according to the income type of the mining node, the type of obtained virtual currency is consistent with the income type of the mining node. For the mining node, if the user sets up the mining node to perform a certain work, after the mining node completes the work, the cryptocurrency mining pool system first makes the settlement using the type of currency according to the type of the income generated by the mining node that performed the work. For example, if the mining node is presently configured by the user to mine bitcoins, the income generated by the mining node in the process of the work is bitcoin. When the mining node finishes mining the bitcoins, when the cryptocurrency mining pool system makes the settlement according to the workload mining node performs, the obtained currency is bitcoin.

In step 303, the cryptocurrency mining pool system accesses the exchange institution and sends a transaction request to the exchange institution. The transaction request includes at least the currency quantity of the virtual currency.

In certain embodiments, the exchange institution provides a virtual currency transaction service for the cryptocurrency mining pool system, so that the cryptocurrency mining pool system may obtain fiat currency having the monetary value equal to the virtual currency. The exchange institution may be an exchange brokerage or a C2C (Customer to Customer) platform. When the cryptocurrency mining pool system needs to exchange the virtual currency into fiat currency, it may access the exchange institution and send a transaction request carrying the currency quantity of the virtual currency to the exchange institution, so that the exchange institution may identify a transaction partner according to the currency quantity of the virtual currency to perform the exchange. The cryptocurrency mining pool system may be connected to the exchange institution during system initiation, and maintain the connection with the exchange institution during the exchange process. Alternatively, the cryptocurrency mining pool system may access the exchange institution when the virtual currency needs to be exchanged, and after successfully exchanging the virtual currency into fiat currency, the connection with the exchange institution may be disconnected. The present disclosure does not specifically limit the timing and manner of the cryptocurrency mining pool system's accessing to the exchange institution.

In certain instances, due to a limited size of certain exchange institution, the exchange institution may not be able to meet the transaction request sent by the cryptocurrency mining pool system. The cryptocurrency mining pool system may access multiple exchange institutions. When the cryptocurrency mining pool system needs to exchange the virtual currency into a specific settlement currency, the cryptocurrency mining pool system may send transaction requests to multiple exchange institutions, so that the multiple exchange institutions determine whether there is a transaction partner available, and the cryptocurrency mining pool system may conduct the exchange transaction with the exchange institution from which the cryptocurrency mining pool system receives the transaction confirmation command first. The present disclosure does not specifically limit the number of the exchange institutions that the cryptocurrency mining pool system accesses.

For the scenario where the user has not established a settlement account, since the user does not have an account number, the user terminal cannot receive fiat currency during the currency settlement, and the cryptocurrency mining pool system may need to use virtual currency for workload settlement. In this scenario, before the cryptocurrency mining pool system accesses the exchange institution, the cryptocurrency mining pool system may first obtain the node identifier of the mining node to perform the settlement. Based on whether the mining node corresponding to the node identifier has a settlement account, if the settlement account exists, then the cryptocurrency mining pool system may execute step 303 in the forgoing description. If the mining node corresponding to the node identifier does not a settlement account, then steps 303-310 may be skipped. The cryptocurrency mining pool system may directly generate a currency address for the virtual currency, and sends the currency address to the mining node. When the cryptocurrency mining pool system determines whether there is a settlement account corresponding to the mining node, the cryptocurrency mining pool system may perform a query according to the node identifier of the mining node. If the settlement account corresponding to the node identifier is not found, or the settlement account corresponding to the node identifier is null, the cryptocurrency mining pool system may determine that there is presently no settlement account associated with the mining node corresponding to the node identifier. The present disclosure does not specifically limit the manner of identifying the settlement account.

Furthermore, in order to simplify the process of currency settlement, and to avoid the need for identifying the settlement account of a mining node when exchanging the virtual currency into fiat currency is not required, the user of the mining node may send a virtual currency settlement request to the cryptocurrency mining pool system on the user terminal that controls the mining node after the work has been performed on the mining node. Thus, when the cryptocurrency mining pool system receives the virtual currency settlement request, it is then indicated that the user of the mining node wishes to use virtual currency for the currency settlement. The cryptocurrency mining pool system may generate the currency address for the virtual currency, and send the currency address to the mining node. Steps 303-310 may be skipped for this scenario.

In step 304, the exchange institution receives the transaction request sent by the cryptocurrency mining pool system, identifies a transaction partner according to the transaction request, and sends a transaction confirmation command to the cryptocurrency mining pool system.

In certain embodiments, after the exchange institution receives the transaction request sent by the cryptocurrency mining pool system, the exchange institution extracts the currency quantity of the virtual currency from the transaction request, identifies the transaction partner that is available to be exchanged with according to the currency quantity, and sends a transaction confirmation command to the cryptocurrency mining pool system. In certain embodiments, the exchange institution may add a transaction partner identifier in the transaction confirmation command when sending the transaction confirmation command to the cryptocurrency mining pool system to clarify the information on the transaction partner to the cryptocurrency mining pool system.

In order to facilitate the exchange institution to identify the corresponding transaction partner according to the currency quantity, the transaction partner may display the presently requested currency quantity to the exchange institution. For example, suppose that presently exist transaction partners A and B, the currency quantity that needs is 3000, and the currency quantity B needs is 500. If the transaction request that exchange institution received carries a currency quantity of 1000, the exchange institution may select A as the transaction partner, and send a transaction confirmation command to the cryptocurrency mining pool system.

In step 305, the cryptocurrency mining pool system sends the virtual currency to the exchange institution upon receipt of the transaction confirmation command sent by the exchange institution.

In certain embodiments, when the cryptocurrency mining pool system receives the transaction confirmation command sent by the exchange institution after it identifies the transaction partner, the cryptocurrency mining pool system may determine that the virtual currency can be presently exchanged, and send the virtual currency to the exchange institution. The exchange institution then may send the virtual currency to the transaction partner, receive the fiat currency with equal monetary value as the virtual currency, and then send the fiat currency to the cryptocurrency mining pool system.

In step 306, the exchange institution receives the virtual currency sent by the cryptocurrency mining pool system and sends the virtual currency to the transaction partner.

In certain embodiments, after the exchange institution receives the virtual currency sent by the cryptocurrency mining pool system, the exchange institution may determine that the cryptocurrency mining pool system presently confirms the transaction with the transaction partner. The exchange institution then may send the virtual currency to the transaction partner, so that the transaction partner may return the fiat currency with equal monetary value as the virtual currency.

In step 307, the transaction partner receives the virtual currency sent by the exchange institution, determines the fiat currency according to the currency quantity of the virtual currency, and sends the fiat currency to the exchange institution, wherein the fiat currency has equal monetary value as the virtual currency.

In certain embodiments, after receiving the virtual currency sent by the exchange institution, the transaction partner may first determine the currency quantity of the virtual currency, and then determine the fiat currency with equal monetary value as the virtual currency. The transaction partner then may send the fiat currency to the exchange institution, so that the exchange institution may return the fiat currency to the cryptocurrency mining pool system.

In certain embodiments, since the type of the virtual currency used for the settlement by the cryptocurrency mining pool system is determined by the type of income of the mining node, the type of virtual currency the exchange institution receives from the cryptocurrency mining pool system and sends to the transaction partner may not be a fixed type of virtual currency. Thus, when receiving the virtual currency sent by the exchange institution, the transaction partner may first determine the type of the received virtual currency, and then determine the quantity of the fiat currency by calculating the currency exchange according to the exchange rate between the virtual currency and the fiat currency. The present disclosure does not specifically limit the manner of determining the quantity of the fiat currency.

In step 308, the exchange institution receives the fiat currency sent by the transaction partner and sends the fiat currency to the cryptocurrency mining pool system.

In certain embodiments, after the exchange institution receives the fiat currency sent by the transaction partner, the exchange institution may send the fiat currency to the cryptocurrency mining pool system, so that the cryptocurrency mining pool system may make settlement with the mining node based on the fiat currency.

In step 309, the cryptocurrency mining pool system receives the fiat currency sent by the exchange institution, identifies the settlement account established by the user of the mining node, and transfers the fiat currency to the settlement account.

In certain embodiments, after the cryptocurrency mining pool system receives the fiat currency sent by the exchange institution, the cryptocurrency mining pool system may identify the settlement account established by the user of the mining node, and transfer the fiat currency to the settlement account to complete the settlement.

In certain embodiments, when identifying the settlement account established by the user, the cryptocurrency mining pool system may first obtain the node identifier of the mining node, and search the settlement account according to the node identifier. After the search is completed and the settlement account is identified, the cryptocurrency mining pool system may transfer the fiat currency to the settlement account, and complete the currency settlement.

In step 310, the cryptocurrency mining pool system determines the exchange rate between the virtual currency and the fiat currency, and sends the exchange rate to the mining node, so that the mining node may present the exchange rate to the user.

In certain embodiments, since the transaction partner may make an error when determining the fiat currency quantity according to the virtual currency quantity, the user may receive an incorrect quantity of the fiat currency. In order to avoid the forgoing situation, after the cryptocurrency mining pool system transfers the fiat currency to the user's settlement account, the cryptocurrency mining pool system may determine the settlement exchange rate between the virtual currency and the fiat currency according to the type of the virtual currency, and send the settlement exchange rate to the mining node. Thus, the user of the mining node may obtain the settlement exchange rate and make calculation according to the settlement exchange rate to determine whether the received fiat currency is in the correct quantity. When an incorrect quantity of the fiat currency is received, the user may appeal to the cryptocurrency mining pool system, so that the cryptocurrency mining pool system may re-settle with the mining node according to the workload.

In certain embodiments, in order to simplify the virtual currency settlement process, step 310 may be omitted, that is, when step 309 is completed, the cryptocurrency mining pool system then determines that the settlement is complete.

In certain embodiments, the cryptocurrency mining pool system settles with the mining node according to its workload to acquire virtual currency based on the type of income of the mining node. The cryptocurrency mining pool system conducts transactions with the exchange institution, so that the virtual currency is exchanged into fiat currency, and then transfers the fiat currency to the settlement account established by the mining node user. Since the virtual currency is exchanged into fiat currency, and the settlement account includes the user's card number, account name, and user account information, the security of the currency during settlement is improved, and the loss in the cryptocurrency mining pool system is prevented. Furthermore, it is easier to track the currency according to the settlement account.

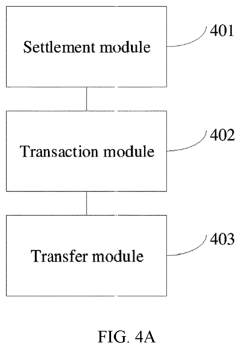

FIG. 4A is a block diagram of an exemplary embodiment of a currency settlement apparatus for a cryptocurrency mining pool system. Referring to FIG. 4A, the apparatus includes a settlement module 401, a transaction module 402, and a transfer module 403.

The settlement module 401 is configured to settle with the mining node according to its workload to acquire virtual currency based on the type of income of the mining node.

The transaction module 402 is configured to conduct a transaction with an exchange institution to exchange the virtual currency into a fiat currency with equal monetary value as the virtual currency.

The transfer module 403 is configured to identify the settlement account established by the user of the mining node, and transfer the fiat currency to the settlement account. The settlement account includes at least the user's card number, account name, and user account information.

In certain embodiments, the apparatus provided by the present disclosure may settle with a mining node according to its workload to acquire virtual currency based on the type of income of the mining node. The apparatus may conduct transactions with an exchange institution, so that the virtual currency is exchanged into fiat currency, and then transfer the fiat currency to the settlement account set by the mining node user. Since the virtual currency is exchanged into fiat currency, and the settlement account includes the user's card number, account name, and user account information, the security of the currency during settlement is improved, and the loss in the cryptocurrency mining pool system is prevented. Furthermore, it is easier to track the currency according to the settlement account.

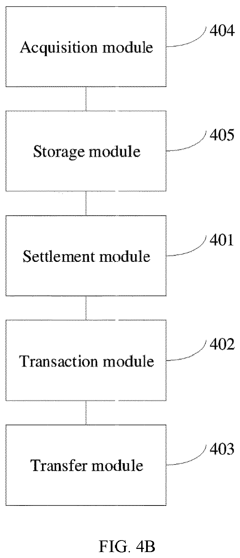

In another embodiment, referring to FIG. 4B, the apparatus further includes an acquisition module 404 and a storage module 405.

The acquisition module 404 is configured to identify a settlement account of the mining node when detecting that the mining node is accessing the cryptocurrency mining pool system;
The storage module 405 is configured to store the node identifier of the mining node and the corresponding settlement account.

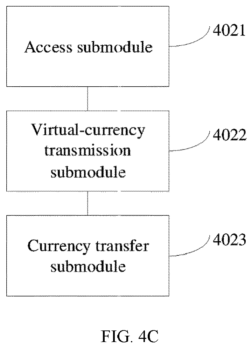

In certain embodiments, referring to FIG. 4C, the transaction module 402 may include an access submodule 4021, a virtual-currency transmission submodule 4022, and a currency transfer submodule 4023.

The access submodule 4021 is configured to access an exchange institution, and send a transaction request to the exchange institution, so that the exchange institution may identify a transaction partner according to the transaction request. The transaction request includes at least the currency quantity of the virtual currency.

The virtual-currency transmission submodule 4022 is configured to: after receiving the transaction confirmation command sent by the exchange institution after it identifies a transaction partner, send the virtual currency to the exchange institution, so that the exchange institution may send the virtual currency to the transaction partner, and the transaction partner may send the fiat currency to the exchange institution after receiving the virtual currency.

The currency transfer submodule 4023 is configured to receive fiat currency sent by the exchange institution.

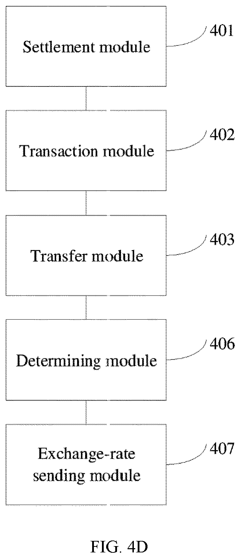

In certain embodiments, referring to FIG. 4D, the apparatus may further include a determining module 406 and an exchange rate transmitting module 407.

The determining module 406 is configured to determine the settlement exchange rate between the virtual currency and the fiat currency.

The exchange-rate sending module 407 is configured to send the settlement exchange rate to the mining node, so that the mining node may present the settlement exchange rate to the user.

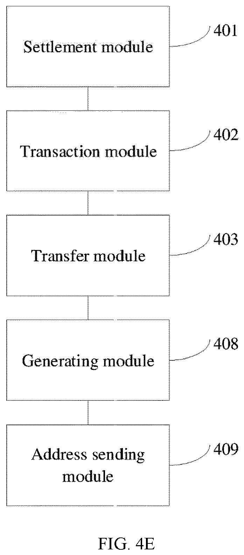

In certain embodiments, referring to FIG. 4E, the apparatus may further include a generating module 408 and an address sending module 409.

The generating module 408 is configured to generate a virtual currency address of the virtual currency if a virtual currency settlement request sent by the mining node is received.

The address sending module 409 is configured to send the virtual currency address to the mining node.

With regard to the apparatus in the forgoing embodiments, the specific manner in which the respective modules perform the operations has been described in detail in the embodiments related to the method, and will not be explained again in detail herein.

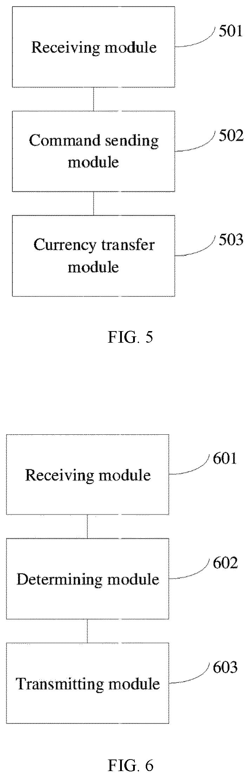

FIG. 5 is a block diagram of a currency settlement apparatus for an exchange institution according to an exemplary embodiment. Referring to FIG. 5, the apparatus may include a receiving module 501, a command sending module 502, and a currency transfer module 503.

The receiving module 501 is configured to receive a transaction request sent by the cryptocurrency mining pool system, where the transaction request includes at least the currency quantity of the virtual currency to be exchanged.

The command sending module 502 is configured to send a transaction confirmation command to the cryptocurrency mining pool system according to the identified transaction partner, so that the cryptocurrency mining pool system may send the virtual currency to the exchange institution after receiving the transaction confirmation command.

The currency transfer module 503 is configured to receive the virtual currency sent by the cryptocurrency mining pool system, and to send the virtual currency to the transaction partner, so that after receiving the virtual currency, the transaction partner may send the fiat currency with equal monetary value to the exchange institution.

The currency transfer module 503 is further configured to receive the fiat currency sent by the transaction partner, and to send the fiat currency to the cryptocurrency mining pool system, so that the cryptocurrency mining pool system may perform settlement with the mining node based on the fiat currency.

According to the apparatus provided by present disclosure, the exchange institution may receive the transaction request sent by the cryptocurrency mining pool system, identify a transaction partner according to the transaction request, and send a transaction confirmation command to the cryptocurrency mining pool system, so that the cryptocurrency mining pool system may receive the transaction confirmation command and send the virtual currency to the exchange institution. When the virtual currency sent by the cryptocurrency mining pool system is received, the exchange institution may send the virtual currency the transaction partner, so that the transaction partner may send the fiat currency to the exchange institution after receiving the virtual currency. The exchange institution may then send the fiat currency to the cryptocurrency mining pool system, so that the cryptocurrency mining pool system may perform currency settlement based on the fiat currency. Since the virtual currency is exchanged into fiat currency, and the settlement account includes the user's card number, account name, and user account information, the security of the currency during settlement is improved, and the loss in the cryptocurrency mining pool system is prevented. Furthermore, it is easier to track the currency according to the settlement account.

FIG. 6 is a block diagram of a currency settlement apparatus for a transaction partner according to an exemplary embodiment. Referring to FIG. 6, the apparatus includes a receiving module 601, a determining module 602, and a transmitting module 603.

The receiving module 601 is configured to receive virtual currency sent by the exchange institution. The virtual currency has been generated by the cryptocurrency mining pool system and sent to the exchange institution.

The determining module 602 is configured to determine the quantity of fiat currency according to the quantity of the virtual currency, so that the fiat currency has equal monetary value as the virtual currency.

The transmitting module 603 is configured to send the fiat currency to the exchange institution, so that the exchange institution may send the fiat currency to the cryptocurrency mining pool system.

Based on the apparatus provided by the present disclosure, the transaction partner may receive the virtual currency sent by the exchange institution, determines the fiat currency quantity according to the currency quantity of the virtual currency, and sends the fiat currency to the exchange institution, so that the exchange institution may send the fiat currency to the cryptocurrency mining pool system. Since the virtual currency is exchanged into fiat currency, and the settlement account includes the user's card number, account name, and user account information, the security of the currency during settlement is improved, and the loss in the cryptocurrency mining pool system is prevented. Furthermore, it is easier to track the currency according to the settlement account.

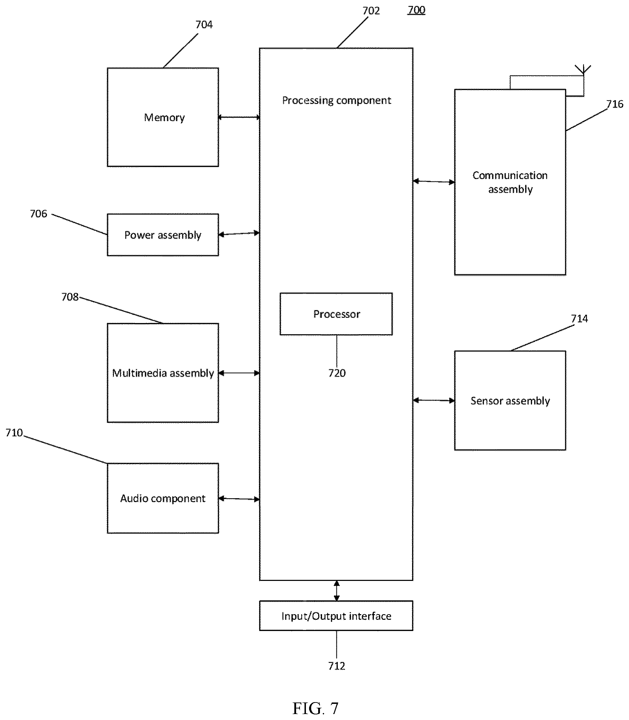

FIG. 7 is a block diagram illustrating a currency settlement apparatus 700 according to an exemplary embodiment. The apparatus may be a mobile phone, a computer, a digital broadcast terminal, a messaging device, a gaming console, a tablet device, a medical device, a fitness device, a personal digital assistant, and the like.

Referring to FIG. 7, apparatus 700 may include one or more of the following components: processing component 702, memory 704, power assembly 706, multimedia assembly 708, audio component 710, I/O (Input/Output) interface 712, sensor assembly 714, and communication assembly 716.

The processing component 702 typically controls the overall operations of apparatus 700, such as operations associated with display, telephone calls, data communications, camera operations, and recording operations. The processing component 702 may include one or more processors 720 to execute instructions to perform all or part of the steps in the forgoing description. Moreover, the processing component may include one or more modules to facilitate interaction between component 702 and other components. For example, processing component 702 may include a multimedia module to facilitate interaction between multimedia assembly 708 and processing component 702.

The memory 704 is configured to store various types of data to support operation of the apparatus 700. Examples of such data include instructions for any application or method operating on apparatus 700, contact data, phone book data, messages, pictures, videos, and the like. The memory 704 may be implemented by any type of volatile or non-volatile storage devices, or combinations thereof, such as SRAM (Static Random Access Memory, Static Random Access Memory), EEPROM (Electrically-Erasable Programmable Read-Only Memory, electrical Erasable programmable read only memory, EPROM (Erasable Programmable Read Only Memory), PROM (Programmable Read-Only Memory), ROM (Read-Only Memory, Read only memory), magnetic memory, flash memory, disk or optical disk.

The power assembly 706 provides power to the various components of the apparatus 700. The power assembly 706 may include a power management system, one or more power sources, and other components associated with generating, managing, and distributing power for apparatus 700.

The multimedia assembly 708 may include a screen that provides an output interface. In certain embodiments, the screen may include an LCD (Liquid Crystal Display) and a TP (Touch Panel). If the screen includes a touch panel, the screen can be implemented as a touch screen to receive input signals from a user. The touch panel may include one or more touch sensors to sense touches, swipes, and gestures on the touch panel. The touch sensor may sense not only the boundary of the touch or sliding action, but also the duration and pressure associated with the touch or slide operation. In some embodiments, the multimedia assembly 708 may include a front camera and/or a rear camera. When the apparatus 700 is in an operational mode, such as a shooting mode or a video mode, the front camera and/or the rear camera may receive external multimedia data. Each front and rear camera may be a fixed optical lens system or have focal length and optical zoom capabilities.

The audio component 710 is configured to output and/or input an audio signal. For example, the audio component 710 may include a MIC (Microphone) that is configured to receive an external audio signal when the apparatus 700 is in an operational mode, such as a call mode, a recording mode, and a voice recognition mode. The received audio signal may be further stored in the memory 704 or transmitted via the communication assembly 716. In some embodiments, the audio component 710 may also include a speaker for outputting an audio signal.

The I/O interface 712 provides an interface between the processing component 702 and the peripheral interface module, which may be a keyboard, a click wheel, a button, or the like. These buttons may include, but are not limited to, a home button, a volume button, a start button, and a lock button.

Sensor assembly 714 includes one or more sensors for providing state assessment of various aspects to apparatus 700. For example, sensor assembly 714 may detect an on/off state of apparatus 700, a relative positioning of components, such as a display and a keypad of apparatus 700. The sensor assembly 714 may also detect a change in position of apparatus 700 or a component of apparatus 700, the presence or absence of user contact, or changes in temperature, orientation or acceleration/deceleration of the apparatus 700. The sensor assembly 714 may include a proximity sensor configured to detect the presence of nearby objects without any physical contact. The sensor assembly 714 may further include a light sensor, such as CMOS (Complementary Metal Oxide Semiconductor) or CXD (Chargecoupled Device) image sensor, for use in imaging applications. In some embodiments, the sensor assembly 714 may also include an acceleration sensor, a gyro sensor, a magnetic sensor, a pressure sensor, or a temperature sensor.

The communication assembly 716 is configured to facilitate wired or wireless communication between apparatus 700 and other devices. The apparatus 700 may access a wireless network according to a communication standard, such as Wi-Fi, 2G or 3G, or a combination thereof. In an exemplary embodiment, communication assembly 716 receives broadcast signals or broadcast associated information from an external broadcast management system via a broadcast channel. In one exemplary embodiment, the communication assembly 716 further includes a communication NFC (Near-field communication) module to facilitate short-range communications. For example, the NFC module can be implemented with RFID (Radio Frequency Identification) technologies, IrDA (Infra-red Data Association) technologies, UWB (ultrawideband) technologies, BT (Bluetooth) technologies, and so on.

In an exemplary embodiment, the apparatus 700 may be implemented with one or more ASICs (Application Specific Integrated Circuits), DSP (Digital Signal Processor) Device, PLD (Programmable Logic Device), FPGA (Field Programmable Gate Array), controller, microcontroller, microprocessor or other electronic component implementation for executing the forgoing currency settlement method.

In an exemplary embodiment, there is also provided a non-transitory computer readable storage medium including instructions, such as a memory 704 including instructions executable by the processor 720 of apparatus 700 to perform the methods in the forgoing description. For example, the non-transitory computer readable storage medium may be ROM (Read-Only Memory), RAM (Random Access Memory), CDROM (Compact Disc Read-Only Memory), tape, floppy disks, optical data storage devices, and so on.

The non-transitory computer readable storage medium, when the instructions in the storage medium are executed by a processor of the currency settlement apparatus, enables the currency settlement apparatus to execute the currency settlement methods in the forgoing description.

When the foregoing described embodiments are implemented in a form of a software functional module or submodules and used as an independent product, the software module or submodule may be computer programs stored in the foregoing computer readable storage medium. Based on such an understanding, the technical solutions of this application, or all or some of the technical solutions may be implemented in a form of a software product by one or more processors executing the software modules or submodules. The computer software product modules or units may be stored in a storage medium and includes several instructions for instructing one or more computer devices (which may be a personal computer, a server, a network device, or the like) to perform all or some of the steps of the methods described in the embodiments of this application.

In addition, functional modules or submodules in the embodiments of this application may be integrated into one processing unit, or each of the units may exist alone physically, or two or more units are integrated into one unit. The functional module or unit may be implemented in a form of hardware, in a form of software functional modules and units, or may be implemented by a combination of software and hardware components.

Other embodiments of the invention will be apparent to those skilled in the art. The present disclosure is intended to cover any variations, uses, or adaptations that are in accordance with the general principles of the present disclosure.

## Claims

1. A currency settlement method for a cryptocurrency mining pool system, comprising:
settling (101), by a processor of the cryptocurrency mining pool system, with a mining node using a virtual currency according to a workload performed by the mining node and an income type of the mining node;
transacting (102), by the processor, with an exchange institution to exchange an amount of the virtual currency into an amount of a fiat currency;
identifying (103), by the processor, a settlement account associated with the mining node, the settlement account being associated with a user card number, an account name, and user account information; and
transferring (103), by the processor, the amount of the fiat currency to the settlement account;
wherein the transacting (102), by the processor, with the exchange institution to exchange the amount of the virtual currency into the amount of the fiat currency comprises:
accessing, by the processor, the exchange institution and submitting a transaction request to the exchange institution, so that the exchange institution identifies a transaction partner according to the transaction request, wherein the transaction request comprises at least an amount in a virtual currency;
after receiving a transaction confirmation command sent by the exchange institution after the transaction partner is identified, sending, by the processor, the virtual currency to the exchange institution, so that the exchange institution sends the virtual currency to the transaction partner and receives the fiat currency which is sent by the transaction partner after receiving the virtual currency, and
receiving, by the processor, the fiat currency sent by the exchange institution.

2. The currency settlement method according to claim 1, before settling (101), by the processor, with the mining node, the method further comprises:
detecting, by the processor, the mining node accessing the cryptocurrency mining pool system;
acquiring, by the processor, a node identifier associated with the mining node;
acquiring, by the processor, information of the settlement account associated with the mining node; and
storing, by the processor, the node identifier and the account information.

3. The currency settlement method according to claim 1, wherein after transferring (103), by the processor, the amount of the fiat currency to the settlement account, the method further comprises:
determining, by the processor, an exchange rate between the virtual currency and the fiat currency; and
sending, by the processor, the exchange rate to the mining node, the mining node presenting the exchange rate.

4. The currency settlement method according to claim 1, further comprising:
if receiving a request from the mining node to settle in the virtual currency, generating, by the processor, a virtual currency address for the virtual currency, and sending the virtual currency address to the mining node.

5. A currency settlement method for an exchange institution, comprising:
receiving (104), by a processor of the exchange institution, a transaction request from a cryptocurrency mining pool system, wherein the transaction request comprises at least an amount in a virtual currency;
identifying (105), by the processor, the transaction partner according to the transaction request;
sending (105), by the processor, a transaction confirmation command to the cryptocurrency mining pool system;
receiving (106), by the processor, the amount of the virtual currency from the cryptocurrency mining pool system;
transmitting (106), by the processor, the amount of the virtual currency to the transaction partner to exchange to an amount of a fiat currency, the amount of the fiat currency having a same monetary value as the amount of the virtual currency;
receiving (107), by the processor, the amount of the fiat currency from the transaction partner; and
transferring (107), by the processor, the amount of the fiat currency to the cryptocurrency mining pool system.

6. A currency settlement method for a transaction partner, comprising:
receiving (108), by a processor of the transaction partner an amount of a virtual currency from an exchange institution, the amount of the virtual currency having been generated by a cryptocurrency mining pool system and transmitted to the exchange institution, wherein the transaction partner is identified by the exchange institution according to a transaction request transmitted by the cryptocurrency mining pool system and a transaction confirmation command is sent by the exchange institution to the cryptocurrency mining pool system after the transaction partner is identified by the exchange institution, the transaction request comprises at least an amount in a virtual currency;
determining (109), by the processor, an amount of a fiat-currency according to the amount of the virtual currency, the amount of the fiat-currency having a same monetary value as the amount of the virtual currency; and
transferring (110), by the processor, the fiat currency to the exchange institution, so that the exchange institution transfers the amount of the fiat currency to the cryptocurrency mining pool system.

7. A currency settlement apparatus for a cryptocurrency mining pool system, wherein the virtual currency settlement apparatus comprises a memory storing one or more computer programs; and a processor coupled to the memory and configured to:
make a settlement with a mining node in a virtual currency according to a workload performed by the mining node and an income type of the mining node;
transact with an exchange institution to exchange an amount of the virtual currency into an amount of a fiat currency;
identify a settlement account associated with the mining node and transfer the amount of the fiat currency to the settlement account, the settlement account being associated with a user card number, an account name, and user account information; and
transfer the amount of the fiat currency to the settlement account;
wherein the processor is specifically configured to:
access the exchange institution and submit a transaction request to the exchange institution, so that the exchange institution identifies a transaction partner according to the transaction request, wherein transaction request comprises at least an amount in a virtual currency;
after receiving a transaction confirmation command sent by the exchange institution after the transaction partner is identified, send the virtual currency to the exchange institution, so that the exchange institution sends the virtual currency to the transaction partner and receives the fiat currency which is sent by the transaction partner after receiving the virtual currency, and
receive the fiat currency sent by the exchange institution.

8. The currency settlement apparatus according to claim 7, the processor is further configured to:
detect the mining node accessing the cryptocurrency mining pool system, acquire a node identifier associated with the mining node, and acquire account information of the settlement account associated with the mining node; and
store the node identifier and the account information.

9. The currency settlement apparatus according to claim 7, the processor is further configured to:
determine an exchange rate between the virtual currency and the fiat currency; and
send the exchange rate to the mining node to present the exchange rate.

10. The currency settlement apparatus according to claim 7, the processor is further configured to:
if receiving a request from the mining node to settle in the virtual currency, generate a virtual currency address for the virtual currency; and
send the virtual currency address to the mining node.

11. A currency settlement apparatus for being used by an exchange institution, wherein the virtual currency settlement apparatus comprises a memory storing one or more computer programs; and a processor coupled to the memory and configured to:
receive a transaction request from a cryptocurrency mining pool system, wherein the transaction request comprises at least an amount in a virtual currency;
identify a transaction partner according to the transaction request, and send a transaction confirmation command to the cryptocurrency mining pool system, the cryptocurrency mining pool system transmitting the amount of the virtual currency to the exchange institution; and
receive the amount of the virtual currency from the cryptocurrency mining pool system, transmit the amount of the virtual currency to the transaction partner, the transaction partner transferring the amount of the fiat currency to the exchange institution, receive the amount of the fiat currency from the transaction partner, and transfer the fiat currency to the cryptocurrency mining pool system, the cryptocurrency mining pool system performing currency settlement based on the amount of the fiat currency, wherein the amount of the fiat currency has a same monetary value as the amount of the virtual currency.

12. A currency settlement apparatus for a transaction partner, wherein the virtual currency settlement apparatus comprises a memory storing one or more computer programs; and a processor coupled to the memory and configured to:
receive an amount of a virtual currency from an exchange institution, the amount of the virtual currency having been generated by a cryptocurrency mining pool system and transmitted to the exchange institution, wherein the transaction partner is identified by the exchange institution according to a transaction request transmitted by the cryptocurrency mining pool system and a transaction confirmation command is sent by the exchange institution to the cryptocurrency mining pool system after the transaction partner is identified by the exchange institution, the transaction request comprises at least an amount in a virtual currency;
determine an amount of a fiat currency according to an amount of the virtual currency, the amount of the fiat currency having a same monetary value as the amount of the virtual currency; and
transfer the amount of the fiat currency to the exchange institution, the exchange institution transferring the amount of the fiat currency to the cryptocurrency mining pool system, so that the exchange institution transfers the amount of the fiat currency to the cryptocurrency mining pool system.

## Patentansprüche

1. Währungsabwicklungsverfahren für ein Kryptowährung-Mining-Pool-System, umfassend:
Abrechnen (101) durch einen Prozessor des Kryptowährung-Mining-Pool-Systems mit einem Mining-Knoten unter Verwendung einer virtuellen Währung entsprechend einer vom Mining-Knoten ausgeführten Arbeitslast und einer Einkommensart des Mining-Knotens;
Durchführen (102) einer Transaktion durch den Prozessor mit einer Wechselstelle, um einen Betrag der virtuellen Währung in einen Betrag einer Fiat-Währung umzutauschen;
Identifizieren (103) eines mit dem Mining-Knoten verbundenen Abrechnungskontos durch den Prozessor, wobei das Abrechnungskonto mit einer Benutzerkartennummer, einem Kontonamen und Benutzerkontoinformationen verbunden ist; und
Übertragen (103) des Betrags der Fiat-Währung durch den Prozessor auf das Abrechnungskonto;
wobei die Transaktion (102) durch den Prozessor mit der Wechselstelle zum Umtausch des Betrags der virtuellen Währung in den Betrag der Fiat-Währung umfasst:
Zugreifen des Prozessors auf die Wechselstelle und Übermitteln einer Transaktionsanforderung an die Wechselstelle, so dass die Wechselstelle einen Transaktionspartner gemäß der Transaktionsanforderung identifiziert, wobei die Transaktionsanforderung mindestens einen Betrag in einer virtuellen Währung umfasst;
nach dem Empfang eines Transaktionsbestätigungsbefehls, der von der Wechselstelle nach der Identifizierung des Transaktionspartners gesendet wird, das Senden der virtuellen Währung durch den Prozessor an die Wechselstelle, so dass die Wechselstelle die virtuelle Währung an den Transaktionspartner sendet und die Fiat-Währung empfängt, die vom Transaktionspartner nach dem Empfang der virtuellen Währung gesendet wird, und
Empfangen der von der Wechselstelle gesendeten Fiat-Währung durch den Prozessor.

2. Währungsabwicklungsverfahren nach Anspruch 1, ferner vor der Abwicklung (101) durch den Prozessor mit dem Mining-Knoten umfassend:
Erkennen durch den Prozessor, dass der Mining-Knoten auf das Kryptowährung-Mining-Pool-System zugreift;
Erfassen einer mit dem Mining-Knoten verbundenen Knoten-Kennung durch den Prozessor;
Erfassen von Informationen über das mit dem Mining-Knoten verbundene Abrechnungskonto durch den Prozessor; und
Speichern der Knoten-ID und der Kontoinformationen durch den Prozessor.

3. Währungsabwicklungsverfahren nach Anspruch 1, wobei das Verfahren nach der Übertragung (103) des Betrags der Fiat-Währung auf das Abrechnungskonto durch den Prozessor ferner umfasst:
Bestimmen eines Wechselkurses zwischen der virtuellen Währung und der Fiat-Währung durch den Prozessor; und
Senden des Wechselkurses durch den Prozessor an den Mining-Knoten, wobei der Mining-Knoten den Wechselkurs anzeigt.

4. Währungsabwicklungsverfahren nach Anspruch 1, das ferner umfasst:
Erzeugen einer virtuellen Währungsadresse für die virtuelle Währung durch den Prozessor und Senden der virtuellen Währungsadresse an den Mining-Knoten, beim Empfangen einer Anfrage vom Mining-Knoten zur Abrechnung in der virtuellen Währung.

5. Währungsabwicklungsverfahren für eine Wechselstelle, umfassend:
Empfangen (104) einer Transaktionsanforderung von einem Kryptowährung-Mining-Pool-System durch einen Prozessor der Wechselstelle, wobei die Transaktionsanforderung mindestens einen Betrag in einer virtuellen Währung umfasst;
Identifizieren (105) des Transaktionspartners gemäß der Transaktionsanforderung durch den Prozessor;
Senden (105) eines Transaktionsbestätigungsbefehls durch den Prozessor an das Kryptowährung-Mining-Pool-System;
Empfangen (106) des Betrags der virtuellen Währung durch den Prozessor vom Kryptowährung-Mining-Pool-System;
Übertragen (106) des Betrags der virtuellen Währung durch den Prozessor an den Transaktionspartner, um ihn in einen Betrag einer Fiat-Währung umzutauschen, wobei der Betrag der Fiat-Währung denselben Geldwert wie der Betrag der virtuellen Währung hat;
Empfangen (107) des Betrags der Fiat-Währung vom Transaktionspartner durch den Prozessor; und
Übertragen (107) des Betrags der Fiat-Währung durch den Prozessor an das Kryptowährung-Mining-Pool-System.

6. Währungsabwicklungsverfahren für einen Transaktionspartner, umfassend:
Empfangen (108) eines Betrags einer virtuellen Währung durch einen Prozessor des Transaktionspartners von einer Wechselstelle, wobei der Betrag der virtuellen Währung durch ein Kryptowährung-Mining-Pool-System generiert und an die Wechselstelle übertragen wurde, wobei der Transaktionspartner von der Wechselstelle gemäß einer vom Kryptowährung-Mining-Pool-System übertragenen Transaktionsanforderung identifiziert wird und ein Transaktionsbestätigungsbefehl von der Wechselstelle an das Kryptowährung-Mining-Pool-System gesendet wird, nachdem der Transaktionspartner von der Wechselstelle identifiziert wurde, wobei die Transaktionsanforderung mindestens einen Betrag in einer virtuellen Währung umfasst;
Bestimmen (109) eines Betrags einer Fiat-Währung durch den Prozessor gemäß dem Betrag der virtuellen Währung, wobei der Betrag der Fiat-Währung denselben Geldwert wie der Betrag der virtuellen Währung hat; und
Übertragen (110) der Fiat-Währung durch den Prozessor an die Wechselstelle, so dass die Wechselstelle den Betrag der Fiat-Währung an das Kryptowährung-Mining-Pool-System überträgt.

7. Währungsabwicklungsvorrichtung für ein Kryptowährung-Mining-Pool-System, wobei die virtuelle Währungsabwicklungsvorrichtung einen Speicher umfasst, der ein oder mehrere Computerprogramme speichert; und einen Prozessor, der mit dem Speicher gekoppelt und so konfiguriert ist, dass er:
eine Abrechnung mit einem Mining-Knoten in einer virtuellen Währung entsprechend einer von dem Mining-Knoten ausgeführten Arbeitslast und einer Einkommensart des Mining-Knotens durchführt;
eine Transaktion mit einer Wechselstelle durchführt, um einen Betrag der virtuellen Währung in einen Betrag einer Fiat-Währung umzutauschen;
ein mit dem Mining-Knoten verbundenes Abrechnungskonto identifiziert und den Betrag der Fiat-Währung auf das Abrechnungskonto überweist, wobei das Abrechnungskonto mit einer Benutzerkartennummer, einem Kontonamen und Benutzerkontoinformationen verbunden ist; und
den Betrag der Fiat-Währung auf das Abrechnungskonto überweist;
wobei der Prozessor speziell dafür konfiguriert ist,
auf die Wechselstelle zuzugreifen und eine Transaktionsanforderung an die Wechselstelle zu übermitteln, so dass die Wechselstelle einen Transaktionspartner gemäß der Transaktionsanforderung identifiziert, wobei die Transaktionsanforderung mindestens einen Betrag in einer virtuellen Währung umfasst;
wobei nach Erhalt eines Transaktionsbestätigungsbefehls, der von der Wechselstelle nach Identifizieren des Transaktionspartners gesendet wird, die virtuelle Währung an die Wechselstelle gesendet wird, so dass die Wechselstelle die virtuelle Währung an den Transaktionspartner sendet und die Fiat-Währung empfängt, die vom Transaktionspartner nach Erhalt der virtuellen Währung gesendet wird, und
die von der Wechselstelle gesendeten Fiat-Währung empfängt.

8. Währungsabwicklungsvorrichtung nach Anspruch 7, wobei der Prozessor ferner so konfiguriert ist, dass er
den Mining-Knoten erkennt, der auf das Kryptowährung-Mining-Pool-System zugreift, eine mit dem Mining-Knoten verbundene Knoten-Kennung erfasst und Kontoinformationen des mit dem Mining-Knoten verbundenen Abrechnungskontos erfasst; und
die Knoten-ID und die Kontoinformationen speichert.

9. Währungsabwicklungsvorrichtung nach Anspruch 7, wobei der Prozessor ferner so konfiguriert ist, dass er:
einen Wechselkurs zwischen der virtuellen Währung und der Fiat-Währung bestimmt; und
den Wechselkurs an den Mining-Knoten sendet, um den Wechselkurs anzuzeigen.

10. Währungsabwicklungsvorrichtung nach Anspruch 7, wobei der Prozessor ferner so konfiguriert ist, dass er:
bei Empfang einer Anfrage vom Mining-Knoten zur Abrechnung in der virtuellen Währung eine virtuelle Währungsadresse für die virtuelle Währung generiert; und
die virtuelle Währungsadresse an den Mining-Knoten sendet.

11. Währungsabwicklungsvorrichtung zur Verwendung durch eine Wechselstelle, wobei die virtuelle Währungsabwicklungsvorrichtung umfasst: einen Speicher, der ein oder mehrere Computerprogramme speichert; und einen Prozessor, der mit dem Speicher gekoppelt und so konfiguriert ist, dass er:
eine Transaktionsanforderung von einem Kryptowährung-Mining-Pool-System empfängt, wobei die Transaktionsanforderung mindestens einen Betrag in einer virtuellen Währung umfasst;
einen Transaktionspartner gemäß der Transaktionsanforderung identifiziert und einen Transaktionsbestätigungsbefehl an das Kryptowährung-Mining-Pool-System sendet, wobei das Kryptowährung-Mining-Pool-System den Betrag der virtuellen Währung an die Wechselstelle überträgt; und
den Betrag der virtuellen Währung vom Kryptowährung-Mining-Pool-System erhält, den Betrag der virtuellen Währung an den Transaktionspartner übermittelt, der Transaktionspartner den Betrag der Fiat-Währung an die Wechselstelle überweist, den Betrag der Fiat-Währung vom Transaktionspartner erhält und die Fiat-Währung an das Kryptowährung-Mining-Pool-System überweist, wobei das Kryptowährung-Mining-Pool-System die Währungsabrechnung auf der Grundlage des Betrags der Fiat-Währung durchführt, wobei der Betrag der Fiat-Währung denselben Geldwert wie der Betrag der virtuellen Währung hat.

12. Währungsabwicklungsvorrichtung für einen Transaktionspartner, wobei die virtuelle Währungsabwicklungsvorrichtung einen Speicher umfasst, der ein oder mehrere Computerprogramme speichert; und einen Prozessor, der mit dem Speicher gekoppelt und so konfiguriert ist, dass er:
einen Betrag einer virtuellen Währung von einer Wechselstelle empfängt, wobei der Betrag der virtuellen Währung von einem Kryptowährung-Mining-Pool-System generiert und an die Wechselstelle übertragen wurde, wobei der Transaktionspartner von der Wechselstelle anhand einer vom Kryptowährung-Mining-Pool-System übertragenen Transaktionsanforderung identifiziert wird und ein Transaktionsbestätigungsbefehl von der Wechselstelle an das Kryptowährung-Mining-Pool-System gesendet wird, nachdem der Transaktionspartner von der Wechselstelle identifiziert wurde, wobei die Transaktionsanforderung mindestens einen Betrag in einer virtuellen Währung umfasst;
einen Betrag einer Fiat-Währung gemäß einem Betrag der virtuellen Währung bestimmt, wobei der Betrag der Fiat-Währung denselben Geldwert wie der Betrag der virtuellen Währung hat; und
den Betrag der Fiat-Währung an die Wechselstelle überträgt, wobei die Wechselstelle den Betrag der Fiat-Währung an das Kryptowährung-Mining-Pool-System überträgt, so dass die Wechselstelle den Betrag der Fiat-Währung an das Kryptowährung-Mining-Pool-System überträgt.

## Revendications

1. Procédé de règlement de devises pour un système de groupe de minage de cryptomonnaie, comprenant :
le règlement (101), par un processeur du système de groupe de minage de cryptomonnaie, avec un nœud de minage utilisant une monnaie virtuelle selon une charge de travail exécutée par le nœud de minage et un type de revenu du nœud de minage ;
la transaction (102), par le processeur, avec un établissement de change pour échanger un montant de la monnaie virtuelle contre un montant d'une monnaie fiduciaire ;
l'identification (103), par le processeur, d'un compte de règlement associé au nœud de minage, le compte de règlement étant associé à un numéro de carte d'utilisateur, un nom de compte, et des informations de compte d'utilisateur ; et
le transfert (103), par le processeur, du montant de la monnaie fiduciaire vers le compte de règlement ;
en ce que la transaction (102), par le processeur, avec l'établissement de change pour échanger le montant de la monnaie virtuelle contre le montant de la monnaie fiduciaire comprend :
l'accès, par le processeur, à l'établissement de change et la soumission d'une demande de transaction à l'établissement de change, de sorte que l'établissement de change identifie un partenaire de transaction selon la demande de transaction, en ce que la demande de transaction comprend au moins un montant en monnaie virtuelle ;
après réception d'une commande de confirmation de transaction envoyée par l'établissement de change une fois le partenaire de transaction identifié, l'envoi, par le processeur, de la monnaie virtuelle à l'établissement de change, de sorte que l'établissement de change envoie la monnaie virtuelle au partenaire de transaction et reçoive la monnaie fiduciaire qui est envoyée par le partenaire de transaction après réception de la monnaie virtuelle, et
la réception, par le processeur, de la monnaie fiduciaire envoyée par l'établissement de change.

2. Procédé de règlement de devises selon la revendication 1, avant le règlement (101), par le processeur, avec le nœud de minage, le procédé comprend en outre :
la détection, par le processeur, du nœud de minage ayant accès au système de groupe de minage de cryptomonnaie ;
l'acquisition, par le processeur, d'un identifiant de nœud associé au nœud de minage ;
l'acquisition, par le processeur, d'informations sur le compte de règlement associé au nœud de minage ; et
le stockage, par le processeur, de l'identifiant de nœud et des informations de compte.

3. Procédé de règlement de devises selon la revendication 1, en ce que, après le transfert (103) par le processeur du montant de la monnaie fiduciaire vers le compte de règlement, le procédé comprend en outre :
la détermination, par le processeur, d'un taux de change entre la monnaie virtuelle et la monnaie fiduciaire ; et
l'envoi, par le processeur, du taux de change au nœud de minage, le nœud de minage présentant le taux de change.

4. Procédé de règlement de devises selon la revendication 1, comprenant en outre :
si une demande de règlement en monnaie virtuelle est reçue du nœud de minage, la génération, par le processeur, d'une adresse de monnaie virtuelle pour la monnaie virtuelle, et l'envoi de l'adresse de monnaie virtuelle au nœud de minage.

5. Procédé de règlement de devises pour un établissement de change, comprenant :
la réception (104), par un processeur de l'établissement de change, d'une demande de transaction provenant d'un système de groupe de minage de cryptomonnaie, en ce que la demande de transaction comprend au moins un montant en monnaie virtuelle ;
l'identification (105), par le processeur, du partenaire de transaction selon la demande de transaction ;
l'envoi (105), par le processeur, d'une demande de confirmation de transaction au système de groupe de minage de cryptomonnaie ;
la réception (106), par le processeur, du montant de la monnaie virtuelle provenant du système de groupe de minage de cryptomonnaie ;
la transmission (106), par le processeur, du montant de la monnaie virtuelle au partenaire de transaction afin de l'échanger contre une monnaie fiduciaire, le montant de la monnaie fiduciaire ayant une valeur monétaire identique à celle du montant de la monnaie virtuelle ;
la réception (107), par le processeur, du montant de la monnaie fiduciaire provenant du partenaire de transaction ; et
le transfert (107), par le processeur, du montant de la monnaie fiduciaire vers le système de groupe de minage de cryptomonnaie.

6. Procédé de règlement de devises pour un partenaire de transaction, comprenant :
la réception (108), par un processeur du partenaire de transaction d'un montant d'une monnaie virtuelle provenant d'un établissement de change, le montant de la monnaie virtuelle ayant été généré par un système de groupe de minage de cryptomonnaie et transmis à l'établissement de change, en ce que le partenaire de transaction est identifié par l'établissement de change selon une demande de transaction transmise par le système de groupe de minage de cryptomonnaie et une commande de confirmation de transaction est envoyée par l'établissement de change au système de groupe de minage de cryptomonnaie après que le partenaire de transaction a été identifié par l'établissement de change, la demande de transaction comprend au moins un montant en monnaie virtuelle :
la détermination (109), par le processeur, d'un montant d'une monnaie fiduciaire selon le montant de la monnaie virtuelle, le montant de la monnaie fiduciaire ayant une valeur monétaire identique à celle du montant de la monnaie virtuelle ; et
le transfert (110), par le processeur, de la monnaie fiduciaire vers l'établissement de change, de sorte que l'établissement de change transfère le montant de la monnaie fiduciaire vers le système de groupe de minage de cryptomonnaie.

7. Appareil de règlement de devises pour un système de groupe de minage de cryptomonnaie, en ce que l'appareil de règlement de monnaie virtuelle comprend une mémoire stockant un ou plusieurs programmes informatiques ; et un processeur couplé à la mémoire et configuré pour :
effectuer un règlement avec un nœud de minage dans une monnaie virtuelle selon une charge de travail exécutée par le nœud de minage et un type de revenu du nœud de minage ;
effectuer une transaction avec un établissement de change afin d'échanger un montant de la monnaie virtuelle contre un montant d'une monnaie fiduciaire ;
identifier un compte de règlement associé au nœud de minage et transférer le montant de la monnaie fiduciaire vers le compte de règlement, le compte de règlement étant associé à un numéro de carte d'utilisateur, un nom de compte, et des informations de compte d'utilisateur ; et
transférer le montant de la monnaie fiduciaire vers le compte de règlement ;
en ce que le processeur est spécifiquement configuré pour :
accéder à l'établissement de change et soumettre une demande de transaction à l'établissement de change, de sorte que l'établissement de change identifie un partenaire de transaction selon la demande de transaction, en ce que la demande de transaction comprend au moins un montant en monnaie virtuelle ;
après avoir reçu une commande de confirmation de transaction envoyée par l'établissement de change une fois le partenaire de transaction identifié, envoyer la monnaie virtuelle à l'établissement de change, de sorte que l'établissement de change envoie la monnaie virtuelle au partenaire de transaction et reçoive la monnaie fiduciaire qui est envoyée par le partenaire de transaction après réception de la monnaie virtuelle, et
recevoir la monnaie fiduciaire envoyée par l'établissement de change.

8. Appareil de règlement de devises selon la revendication 7, le processeur est en outre configuré pour :
détecter le nœud de minage accédant au système de groupe de minage de cryptomonnaie, acquérir un identifiant de nœud associé au nœud de minage, et acquérir des informations de compte du compte de règlement associé au nœud de minage ; et
stocker l'identifiant de nœud et les informations de compte.

9. Appareil de règlement de devises selon la revendication 7, le processeur est en outre configuré pour :
déterminer un taux de change entre la monnaie virtuelle et la monnaie fiduciaire ; et
envoyer le taux de change au nœud de minage pour présenter le taux de change.

10. Appareil de règlement de devises selon la revendication 7, le processeur est en outre configuré pour :
si une demande est reçue du nœud de minage pour régler en monnaie virtuelle, générer une adresse de monnaie virtuelle pour la monnaie virtuelle ; et
envoyer l'adresse de monnaie virtuelle au nœud de minage.

11. Appareil de règlement de devises destiné à être utilisé par un établissement de change, en ce que l'appareil de règlement de monnaie virtuelle comprend une mémoire stockant un ou plusieurs programmes informatiques ; et un processeur couplé à la mémoire et configuré pour :
recevoir une demande de transaction provenant d'un système de groupe de minage de cryptomonnaie, en ce que la demande de transaction comprend au moins un montant en monnaie virtuelle ;
identifier un partenaire de transaction selon une demande de transaction, et envoyer une commande de confirmation de transaction au système de groupe de minage de cryptomonnaie, le système de groupe de minage de cryptomonnaie transmettant le montant de la monnaie virtuelle à l'établissement de change ; et
recevoir le montant de la monnaie virtuelle provenant du système de groupe de minage de cryptomonnaie, transmettre le montant de la monnaie virtuelle au partenaire de transaction, le partenaire de transaction transférant le montant de la monnaie fiduciaire à l'établissement de change, recevoir le montant de la monnaie fiduciaire du partenaire de transaction, et transférer la monnaie fiduciaire au système de groupe de minage de cryptomonnaie, le système de groupe de minage de cryptomonnaie effectuant le règlement de devises sur la base du montant de la monnaie fiduciaire, en ce que le montant de la monnaie fiduciaire a une valeur monétaire identique à celle du montant de la monnaie virtuelle.

12. Appareil de règlement de devises pour un partenaire de transaction, en ce que l'appareil de règlement de monnaie virtuelle comprend une mémoire stockant un ou plusieurs programmes informatiques ; et un processeur couplé à la mémoire et configuré pour :
recevoir un montant d'une monnaie virtuelle d'un établissement de change, le montant de la monnaie virtuelle ayant été généré par un système de groupe de minage de cryptomonnaie et transmis à l'établissement de change, en ce que le partenaire de transaction est identifié par l'établissement de change selon une demande de transaction transmise par le système de groupe de minage de cryptomonnaie et une commande de confirmation de transaction est envoyée par l'établissement de change au système de groupe de minage de cryptomonnaie après que le partenaire de transaction a été identifié par l'établissement de change, la demande de transaction comprend au moins un montant en monnaie virtuelle ;
déterminer un montant d'une monnaie fiduciaire selon un montant de la monnaie virtuelle, le montant de la monnaie fiduciaire ayant une valeur monétaire identique à celle du montant de la monnaie virtuelle ; et
transférer le montant de la monnaie fiduciaire à l'établissement de change, l'établissement de change transférant le montant de la monnaie fiduciaire au système de groupe de minage de cryptomonnaie, de sorte que l'établissement de change transfère le montant de la monnaie fiduciaire au système de groupe de minage de cryptomonnaie.
